(19)

Europäisches
Patentamt
European
Patent Office
Office européen
des brevets

(11) **EP 2 722 801 A1**

(12) **EUROPEAN PATENT APPLICATION**

(43) Date of publication:
**23.04.2014 Bulletin 2014/17**

(51) Int Cl.:
**G06Q 20/02** (2012.01)       **G06Q 20/32** (2012.01)
**G06Q 20/38** (2012.01)

(21) Application number: **13182284.3**

(22) Date of filing: **29.08.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.10.2012 US 201261715841 P**
**02.07.2013 US 201313933139**

(71) Applicant: **MPayMe Ltd.**
**Wan Chai, Hong Kong (CN)**

(72) Inventors:
• **Lee, Wan Wai**
**Wan Chai (CN)**
• **Fagerlund, Kenth**
**Wan Chai (CN)**
• **Ho, Terry**
**Wan Chai (CN)**
• **Chan, Roy**
**Wan Chai (CN)**

(74) Representative: **Modiano, Micaela Nadia et al**
**Modiano & Partners (DE)**
**Thierschstrasse 11**
**80538 München (DE)**

(54) **Dispute code system for secure mobile payment**

(57)     A method for resolving disputes arising from failed and incomplete payment transactions conducted over a mobile communication infrastructure, comprising generating, by a central processing server, a key and a dispute code using the key and a payment transaction status; receiving, by a payer user device, the dispute code; receiving, by a payee user device, the key; updating, by the central processing server, the dispute code with updated payment transaction status when the payment transaction is completed; receiving, by the payer user device, the updated dispute code; entering into the payee user device the updated dispute code received by the payer user device; generating, by the payee user device, a verifying dispute code using the key and one of the one or more preset status codes; and verifying, by the payee user device, the updated dispute code by comparing the updated dispute code to the verifying dispute code generated.

FIG. 1

EP 2 722 801 A1

**Description**

**Claim for Domestic Priority:**

This application claims priority under 35 U.S.C. § 119 to the U.S. Provisional Utility Patent Application No. 61/715,841, filed October 19, 2012, and the disclosure of which is incorporated herein by reference in its entirety.

**Cross-Reference to Related Application:**

This application is a continuation-in-part of U.S. Patent Application Serial No. 13/602,197 filed September 2, 2012, the disclosure of which is incorporated herein by reference in its entirety.

**Field of the Invention:**

The present invention relates generally to methods of management and execution of electronic bill payments, electronic purchase payments, fund transfers, and other value exchanges. More specifically, the present invention relates to methods of management and execution of financial transactions using mobile communication devices. Still more specifically, the present invention relates to methods for resolving disputes arising from failed and incomplete financial transactions using mobile communication devices.

**Background:**

Modern day commerce involves conducting financial transactions through many different channels using a variety of instruments. Payment transfer of physical currency is the most common means when the transacting parties are located away from any banking facility. Other payment methods and systems have appeared over the years. Credit cards, debit cards, Internet online payment services such as PayPal™, and near field communication (NFC) enabled stored value holder devices and systems, such as the Octopus Card widely used in Hong Kong, China, are some of the more prevalent examples. However, none of the existing payment methods and systems has achieved the same level of ubiquity and ease of use as cash. Each of these payment methods and systems requires its own dedicated infrastructure and/or is limited to a few market channels. For instance, credit card payments require the merchants or the payees to be equipped with card readers and fixed communication networks connecting the readers to the clearance centers.
Another shortcoming of existing payment methods and systems is that person-to-person transactions are either unfeasible or highly inconvenient. Take credits cards, debit cards, and other stored value cards for instance. Although it is possible to mass-produce personal card readers with the current technology, the need for dedicated infrastructures, which are yet to be built out on a scale beyond the city metropolitan level, is an impediment to their general availability and adoption.
Still one obstacle preventing the wide usages and general adoption of these mobile payment methods and systems is the concern for stability and failure recovery for financial transactions conducted over mobile network infrastructures. Mobile payment methods and systems built upon mobile communication infrastructures are susceptible to various adverse effects in every communication layers.
These adverse effects include environmental interferences on the wireless network, man-made and natural disasters affecting the network infrastructure, network overcapacity and degradation of quality of service, and equipment failures. This necessitates a facility or process to recover failed and incomplete transactions. Existing failure recovery methods and systems require expensive implementations specific to their respective payment systems, active end users' involvements, or both.

**Summary:**

It is an objective of the present invention to provide a method and system for providing a failure recovery mechanism for electronic financial transactions conducted over mobile network infrastructures that can be used in conjunction with the mobile payment method and system disclosed in the U.S. Patent Application No. 13/602,197. The present invention can also be adapted to be used in other mobile payment method and systems. It is a further objective of the present invention to provide a method and system for resolving payment disputes arising from failed and incomplete financial transactions conducted over mobile network infrastructures.
In accordance with various embodiments of the mobile payment system disclosed in the U.S. Patent Application No. 13/602,197, the claimed invention comprises a central processing server accessible through a first communication network, such as the Internet; a plurality of users including individual users and business users; and mobile communication devices and client computing devices that can access the central processing server through the first communication network. The authenticity of the financial transactions conducted between the users in this mobile payment system relies primarily on the system restriction that only one mobile communication device is associated ("paired") with the user account of one user at any time.

In accordance to various embodiments of the present invention used in conjunction with the mobile payment method and system disclosed in the U.S. Patent Application No. 13/602,197 and under a payment process in which a payer user of the mobile payment system is making a payment, the process steps of resolving a payment dispute are described as below:

1. The payer user uses a mobile communication device equipped with a scanner or a camera running a secure mobile payment mobile application to optically capture a QR code; wherein the mobile communication device has already been paired with the payer user's user account; and wherein the QR code is being presented as a payment request or cost of goods to be purchased, and that the QR code is generated by the central processing server or by the payee user using his/her mobile communication device or point-of-sale device running a secure mobile payment mobile application.

2. The payer user's mobile communication device running the secure mobile payment mobile application decodes the QR code and sends the decoded information to the central processing server.

3. The central processing server verifies the decoded QR code information received. Upon a positive verification, the central processing server retrieves from its data repository the bill payment information using a reference data in the decoded QR code information received. The bill payment information can include a money amount, description of the specific transaction, point of sale, and the product or service.

4. The central processing server generates a first and a second random keys and a counter value that are specific to this payment transaction. The second key and the counter value are used to generate a first dispute code; and the first key and the counter value are used to generate a second dispute code; wherein the first and second dispute codes are strings of alphanumeric characters.

5. The bill payment information is sent back to the mobile communication device and displayed to the payer user in the secure mobile payment mobile application. In the same or a separate reply data message, the central processing server also provides the first key, the counter value, and the first dispute code to the payer user's mobile communication device.

6. The central processing server sends the second key, the counter value, and the second dispute code to the payee user's mobile communication device, point-of-sale device, or other computing device running a secure mobile payment mobile application.

7. The payer user's mobile communication device running the secure mobile payment mobile application prompts the payer user for entering his/her security PIN. With the security PIN entered, the payer user indicates in the secure mobile payment mobile application to complete the payment.

8. The secure mobile payment mobile application transmits the payer user's security PIN to the central processing server along with the bill payment information, any modified data, appended new data, and identification data about the mobile communication device.

9. The central processing server receives the information and verifies the authenticity of the information received and the payer user using the payer user supplied security PIN, the identification data about the mobile communication device, and data in payer user account preserved in the central processing server. If the authenticity of the information received and the payer user's identity are positively verified, the central processing server executes the transaction by transferring funds from the selected funding source of the payer user account to the selected fund-receiving destination of the payee user account.

10. The central processing server updates the first and second dispute codes with the transaction status information and sends the updated first and second dispute codes to the payer user's mobile communication device and the payee user's mobile communication device, point-of-sale device, or other computing device respectively.

11. The central processing server then sends the execution result of the transaction to both the payer user and the payee user by electronic mail, Internet instant message, SMS telecommunication message, communication message for the secure mobile payment mobile application, or communication via the secure mobile payment server backend APIs. The transaction execution results and history logs are also shown in a web site accessible and readable by a computing device or a mobile communication device running a web browser application, or any application software or firmware designed specifically to access and display web contents.

12. If the payee user does not receive the message of transaction execution result indicating the completion of the payment transaction, or that the payee user disputes the receipt of the payment, the payer user can retrieve the updated first dispute code from his/her mobile communication device and present to the payee user.

13. The payee user enters the updated first dispute code into his/her mobile communication device, point-of-sale device, or other computing device running a secure mobile payment mobile application.

14. The secure mobile payment mobile application verifies the updated first dispute code by comparing to a locally generated third dispute code using the second key and the counter value received during step 6 above and notifies the payee user that the payment transaction was completed.

As can be seen from the above process steps, the first dispute code is received by and stored in the payer user's mobile communication device after the first querying of the QR code in step 5. After receiving the updated first dispute code reflecting the status of the payment transaction in step 10, even if communication between the payer user's mobile communication device and the central processing server and/or communication between the payee user's device and the central processing server is severed, the payment transaction proceeds to completion and that the updated first dispute code can be used to prove the settlement and clearance of the payment transaction.

## Brief Description of the Drawings:

Embodiments of the invention are described in more detail hereinafter with reference to the drawings, in which:

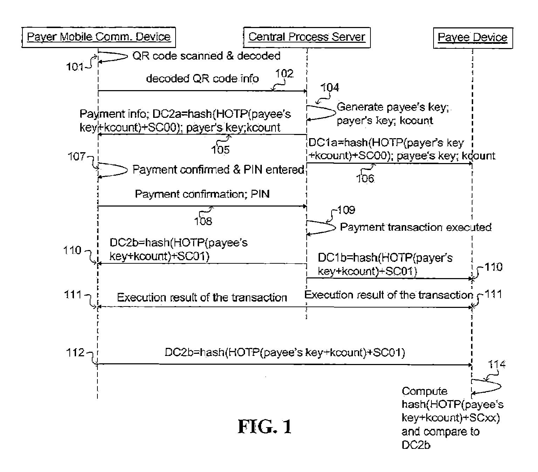

FIG. **1** shows a sequence diagram illustrating the process of resolving payment dispute using a dispute code in accordance to an embodiment of the present invention.

## Detailed Description:

In the following description, methods and systems for providing a failure recovery mechanism for electronic financial transactions conducted over mobile network infrastructures and the likes are set forth as preferred examples. It will be apparent to those skilled in the art that modifications, including additions and/or substitutions may be made without departing from the scope and spirit of the invention. Specific details may be omitted so as not to obscure the invention; however, the disclosure is written to enable one skilled in the art to practice the teachings herein without undue experimentation.
In accordance with the preferred embodiment of the present invention, a financial transaction dispute resolution method and system are adapted to augment the mobile payment method and system disclosed in the U.S. Patent Application No. 13/602,197. The present invention can also be adapted to be used in other data communication methods and systems.
In accordance with various embodiments of the mobile payment system disclosed in the U.S. Patent Application No. 13/602,197, the claimed invention comprises a central processing server accessible through a first communication network, such as the Internet; a plurality of users including individual users and business users; and mobile communication devices and client computing devices that can access the central processing server through the first communication network. The authenticity of the financial transactions conducted between the users in this mobile payment system relies primarily on the system restriction that only one mobile communication device is associated ("paired") with the user account of one user at any time.
Referring to FIG. **1**. In accordance to various embodiments of the present invention used in conjunction with the mobile payment method and system disclosed in the U.S. Patent Application No. 13/602,197 and under a payment process in which a payer user of the mobile payment system is making a payment, the process steps of resolving a payment dispute are described as below:
1(**101**). The payer user uses a mobile communication device equipped with a scanner or a camera running a secure mobile payment mobile application to optically capture a QR code; wherein the mobile communication device has already been paired with the payer user's user account; and wherein the QR code is being presented as a payment request or cost of goods to be purchased, and that the QR code is generated by the central processing server or by the payee user using his/her mobile communication device or point-of-sale device running a secure mobile payment mobile application.
2(**102**). The payer user's mobile communication device running the secure mobile payment mobile application decodes the QR code and sends the decoded information to the central processing server.
3. The central processing server verifies the decoded QR code information received. Upon a positive verification, the central processing server retrieves from its data repository the bill payment information using a reference data in the decoded QR code information received. The bill payment information can include a money amount, description of the specific transaction, point of sale, and the product or service.
4(**104**). The central processing server generates a first and a second random keys and a counter value that are specific to this payment transaction. The second key and the counter value are used to generate a first dispute code; and the first key and the counter value are used to generate a second dispute code; wherein the first and second dispute codes are strings of alphanumeric characters.
5(**105**). The bill payment information is sent back to the mobile communication device and displayed to the payer user in the secure mobile payment mobile application. In the same or a separate reply data message, the central processing server also provides the first key, the counter value, and the first dispute code to the payer user's mobile communication device.
6(**106**). The central processing server sends the second key, the counter value, and the second dispute code to the payee user's mobile communication device, point-of-sale device, or other computing device running a secure mobile payment mobile application.

7(**107**). The payer user's mobile communication device running the secure mobile payment mobile application prompts the payer user for entering his/her security PIN. With the security PIN entered, the payer user indicates in the secure mobile payment mobile application to complete the payment.

8(**108**). The secure mobile payment mobile application transmits the payer user's security PIN to the central processing server along with the bill payment information, any modified data, appended new data, and identification data about the mobile communication device.

9(**109**). The central processing server receives the information and verifies the authenticity of the information received and the payer user using the payer user supplied security PIN, the identification data about the mobile communication device, and data in payer user account preserved in the central processing server. If the authenticity of the information received and the payer user's identity are positively verified, the central processing server executes the transaction by transferring funds from the selected funding source of the payer user account to the selected fund-receiving destination of the payee user account.

10(**110**). The central processing server updates the first and second dispute codes with the transaction status information and sends the updated first and second dispute codes to the payer user's mobile communication device and the payee user's mobile communication device, point-of-sale device, or other computing device respectively.

11(**111**). The central processing server then sends the execution result of the transaction to both the payer user and the payee user by electronic mail, Internet instant message, SMS telecommunication message, communication message for the secure mobile payment mobile application, or communication via the secure mobile payment server backend APIs. The transaction execution results and history logs are also shown in a web site accessible and readable by a computing device or a mobile communication device running a web browser application, or any application software or firmware designed specifically to access and display web contents.

12(**112**). If the payee user does not receive the message of transaction execution result indicating the completion of the payment transaction, or that the payee user disputes the receipt of the payment, the payer user can retrieve the updated first dispute code from his/her mobile communication device and present to the payee user.

13. The payee user enters the updated first dispute code to his/her mobile communication device, point-of-sale device, or other computing device running a secure mobile payment mobile application.

14(**114**). The secure mobile payment mobile application verifies the updated first dispute code by comparing to a locally generated third dispute code using the second key and the counter value received during step 6 above and notifies the payee user that the payment transaction was completed.

As can be seen from the above process steps, the first dispute code is received by and stored in the payer user's mobile communication device after the first querying of the QR code in step 5. After receiving the updated first dispute code reflecting the status of the payment transaction in step 10, even if communication between the payer user's mobile communication device and the central processing server and/or communication between the payee user's device and the central processing server is severed, the payment transaction proceeds to completion and that the updated first dispute code can be used to prove the settlement and clearance of the payment transaction.

In accordance to one embodiment of the present invention, a dispute code comprises a hashed value of a combination of hash-based message authentication code (HMAC)-based One Time Password (HOTP) of a randomly generated key (key) and a counter value (kcount), and a state code (SC). The HOTP algorithm is disclosed in the informational article: M'Raihi, RFC 4226, IETF, December 2005; the content of which is incorporated herein by reference in its entirety. Both the key and the kcount are specific to the payment transaction. The key can be eight bytes long and the kcount can be four bytes long. The SC has one of four possible preset values representing the four different states of a payment transaction: Information Acquired (SC00), Processing Successful (SC01), Processing Failed (SC02), and Error Stopped (SC03). These SC values are universally known by and stored in all paired devices of the mobile payment system.

The aforementioned dispute code can be mathematically represented by:

$$\text{hash}(\text{HOTP}(\text{key} + \text{kcount}) + \text{SCxx});$$

where $\text{SCxx} \in \{\text{SC00, SC01, SC02, SC03}\}$.

When the central processing server first receives the decoded QR code information from a payer user, it creates two keys ($\text{key}_{\text{payer}}$ and $\text{key}_{\text{payee}}$) and a kcount. Two dispute codes, one to be sent to the payee user ($\text{DC}_{\text{payee}}$) and the other to the payer user ($\text{DC}_{\text{payer}}$), are generated as below:

$$DC_{payee} = hash(HOTP(key_{payer} + kcount) + SC00);$$

and

$$DC_{payer} = hash(HOTP(key_{payee} + kcount) + SC00).$$

$DC_{payee}$ along with $key_{payee}$ and kcount are sent to the payer user's mobile communication device at the beginning of the payment transaction (in abovementioned step 5); and $DC_{payer}$ along with $key_{payer}$ and kcount to the payee user's mobile communication device, point-of-sale device, or other computing device in abovementioned step 6.

After the central processing server processes the payment transaction, it updates both $DC_{payee}$ and $DC_{payer}$ with one of the possible State Code values: (SC00), Processing Successful (SC01), Processing Failed (SC02), and Error Stopped (SC03). Therefore, the updated $DC_{payee}$ and $DC_{payer}$ ($DC_{payee}'$ and $DC_{payer}'$ respectively) can be mathematically represented by:

$$DC_{payee}' = hash(HOTP(key_{payer} + kcount) + SCxx);$$

and

$$DC_{payer}' = hash(HOTP(key_{payee} + kcount) + SCxx);$$

where $SCxx \in \{SC01, SC02, SC03\}$.

$DC_{payee}'$ and $DC_{payer}'$ are then sent to the payee user and payer user respectively.

The dispute codes preserved in the payee user's device and the payer user's device can be retrieved from the device and be presented to each other for verification on the completion status of the payment transaction. When the payer user presents its dispute code ($DC_{payer}$) to the payee user, because the payee user's device has retained all the data ($key_{payee}$, kcount, and all possible SC values) it needs to generate a verifying dispute code through the computation the hashing and HOTP algorithms on the data, the status of the payment transaction is verified by comparing the presented dispute code ($DC_{payer}$) to the locally computed verifying dispute code.

The generation and use of the dispute codes as described above provide the secure mobile payment system enhanced security, availability, and integrity by using one-time authentication data, encrypting the authentication data without the need of shared encryption keys or seeds, integrating the exchanges and synchronization of the authentication data within the process steps of payment transactions, and persisting only the partial authentication data in the mobile communication devices.

The embodiments disclosed herein may be implemented using general purpose or specialized computing devices, computer processors, or electronic circuitries including but not limited to digital signal processors (DSP), application specific integrated circuits (ASIC), field programmable gate arrays (FPGA), and other programmable logic devices configured or programmed according to the teachings of the present disclosure. Computer instructions or software codes running in the general purpose or specialized computing devices, computer processors, or programmable logic devices can readily be prepared by practitioners skilled in the software or electronic art based on the teachings of the present disclosure.

In some embodiments, the present invention includes computer storage media having computer instructions or software codes stored therein which can be used to program computers or microprocessors to perform any of the processes of the present invention. The storage media can include, but are not limited to, floppy disks, optical discs, Blu-ray Disc, DVD, CD-ROMs, and magneto-optical disks, ROMs, RAMs, flash memory devices, or any type of media or devices suitable for storing instructions, codes, and/or data.

The foregoing description of the present invention has been provided for the purposes of illustration and description. It is not intended to be exhaustive or to limit the invention to the precise forms disclosed. Many modifications and variations will be apparent to the practitioner skilled in the art.

The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims and their eqnivalence.

**Claims**

1. A computer implemented method for resolving disputes arising from failed or incomplete payment transactions conducted over a mobile communication infrastructure, comprising:

generating, by a central processing server, a second key, wherein the second key is specific to a payment transaction;
generating, by the central processing server, a first dispute code using the second key and a payment transaction status, wherein the payment transaction status is one of one or more preset status codes;
receiving, by a payer user device, the first dispute code from the central processing server;
receiving, by a payee user device, the second key from the ventral processing server;
updating, by the central processing server, the first dispute code with updated payment transaction status when the payment transaction is completed;
receiving, by the payer user device, the updated first dispute code from the central processing server;
entering into the payee user device the updated first dispute code received by the payer user device;
generating, by the payee user device, a first verifying dispute code using the second key and one of the one or more preset status codes;
verifying, by the payee user device, the updated first dispute code by comparing the updated first dispute code to the first verifying dispute code generated; and
if not matched, repeating the generation of first verifying dispute code using another one of the one or more preset status codes and comparing of the updated first dispute code to the first verifying dispute code generated.

2. The method of claim 1, further comprising:

generating, by a central processing server, a first key, wherein the first key is specific to the payment transaction;
generating, by the central processing server, a second dispute code using the first key and the payment transaction status;
receiving, by a payer user device, the first key from the central processing server;
receiving, by a payee user device, the second dispute code from the central processing server;
updating, by the central processing server, the second dispute code with updated payment transaction status when the payment transaction is competed;
receiving, by the payee user device, the updated second dispute code from the central processing server;
entering into the payer user device the updated second dispute code received by the payee user device;
generating, by the payer user device, a second verifying dispute code using the first key and one of the one or more preset status codes;
verifying, by the payee user device, the updated second dispute code by comparing the updated second dispute code to the second verifying dispute code generated; and
if not matched, repeating the generation of second verifying dispute code using another one of the one or more preset status codes and comparing of the updated second dispute code to the second verifying dispute code generated.

3. The method of claim 1,
wherein the generation of the first dispute code being a hashing of a hash-based message authentication code (HMAC)-based One Time Password (HOTP) of the second key, and the payment transaction status;
wherein the generation of the updated first dispute code being a hashing of a HOTP of the second key, and the updated payment transaction status; and
wherein the generation of the first verifying dispute code being a hashing of a HOTP of the second key, and one of the one or more preset status codes.

4. The method of claim 2,
wherein the generation of the second dispute code being a hashing of a HOTP of the first key, and the payment transaction status;
wherein the generation of the updated second dispute code being a hashing of a HOTP of the first key, and the updated payment transaction status; and
wherein the generation of the second verifying dispute code being a hashing of a HOTP of the first key, and one of the one or more preset status codes.

5. The method of claim 1, wherein the one or more preset status codes comprising codes representing a first payment transaction state of information acquired, a second payment transaction state of processing successful, a third payment transaction state of processing failed, and a forth payment transaction state of error stopped.

6. A computer implemented method for resolving disputes arising from failed or incomplete payment transactions conducted over a mobile communication infrastructure, comprising:

   generating, by a central processing server, a second key, and a counter value, wherein the second key is specific to a payment transaction;
   generating, by the central processing server, a first dispute code using the second key, the counter values, and a payment transaction status, wherein the payment transaction status is one of one or more preset status codes;
   receiving, by a payer user device, the first dispute code from the central processing server;
   receiving, by a payee user device, the second key and the counter value from the central processing server;
   updating, by the central processing server, the first dispute code with updated payment transaction status when the payment transaction is completed;
   receiving, by the payer user device, the updated first dispute code from the central processing server;
   entering into the payee user device the updated first dispute code;
   generating, by the payee user device, a first verifying dispute code using the second key, the counter value, and one of the one or more preset status codes;
   verifying, by the payee user device, the updated first dispute code by comparing the updated first dispute code to the first verifying dispute code generated; and
   if not matched, repeating the generation of first verifying dispute code using another one of the one or more preset status codes and comparing of the updated first dispute code to the first verifying dispute code generated.

7. The method of claim 6, further comprising:

   generating, by a central processing server, a first key, wherein the first key is specific to a payment transaction;
   generating, by the central processing server, a second dispute code using the first key, the counter values, and the payment transaction status;
   receiving, by a payer user device, the first key and the counter value from the central processing server;
   receiving, by a payee user device, the second dispute code from the central processing server;
   updating, by the central processing server, the second dispute code with updated payment transaction status when the payment transaction is completed;
   receiving, by the payee user device, the updated second dispute code from the central processing server;
   entering into the payer user device the updated second dispute code;
   generating, by the payer user device, a second verifying dispute code using the first key, the counter value, and one of the one or more preset status codes;
   verifying, by the payer user device, the updated second dispute code by comparing the updated second dispute code to the second verifying dispute code generated; and
   if not matched, repeating the generation of second verifying dispute code using another one of the one or more preset status codes and comparing of the updated second dispute code to the second verifying dispute code generated.

8. The method of claim 6,
   wherein the generation of the first dispute code being a hashing of a combination of a hash-based message authentication code (HMAC)-based One Time Password (HOTP) of the second key and the counter value, and the payment transaction status;
   wherein the generation of the updated first dispute code being a hashing of a combination of HOTP of the second key and the counter value, and the updated payment transaction status; and
   wherein the generation of the first verifying dispute code being a hashing of a combination of a HOTP of the second key and the counter value, and one of the one or more preset status codes.

9. The method of claim 7,
   wherein the generation of the second dispute code being a hashing of a combination of a HOTP of the first key and the counter value, and the payment transaction status;
   wherein the generation of the updated second dispute code being a hashing of a combination of a HOTP of the first key and the counter value, and the updated payment transaction status; and

wherein the generation of the second verifying dispute code being a hashing of a combination of a HOTP of the first key and the counter value, and one of the one or more preset status codes.

10. The method of claim 6, wherein the one or more preset status codes comprising codes representing a first payment transaction state of information acquired, a second payment transaction state of processing successful a third payment transaction state of processing failed, and a forth payment transaction state of error stopped.

11. A system for resolving disputes arising from failed or incomplete payment transactions conducted over a mobile communication infrastructure, comprising:

a central processing server for performing a process comprising:

generating a second key, wherein the second key is specific to a payment transaction;
generating a first dispute code using the second key and a payment transaction status, wherein the payment transaction status is one of one or more preset status codes; and
updating the first dispute code with updated payment transaction status when the payment transaction is completed;

a payer user device for performing a process comprising:

receiving the first dispute code from the central processing server; and
receiving the updated first dispute code from the central processing server; and

a payee user device for performing a process comprising:

receiving the second key from the central processing server;
accepting the updated first dispute code received by the payer user device;
generating a first verifying dispute code using the second key and one of the one or more preset status codes;
verifying the updated first dispute code by comparing the updated first dispute code to the first verifying dispute code generated; and
if not matched, repeating the generation of first verifying dispute code using another one of the one or more preset status codes and comparing of the updated first dispute code to the first verifying dispute code generated.

12. The system of claim 11,
wherein the central processing server further performs:

generating a first key, wherein the first key is specific to the payment transaction;
generating a second dispute code using the first key and the payment transaction status; and
updating the second dispute code with updated payment transaction status when the payment transaction is completed;

wherein the payee user device further performs:

receiving the second dispute code from the central processing server; and
receiving the updated second dispute code from the central processing server; and

wherein the payer user device further performs:

receiving the first key from the central processing server;
accepting the updated second dispute code received by the payee user device;
generating a second verifying dispute code using the first key and one of the one or more preset status codes;
verifying the updated second dispute code by comparing the updated second dispute code to the second verifying dispute code generated; and
if not matched, repeating the generation of second verifying dispute code using another one of the one or more preset status codes and comparing of the updated second dispute code to the second verifying dispute code generated.

**13.** The system of claim 11,
wherein the generation of the first dispute code being a hashing of a hash-based message authentication code (HMAC)-based One Time Password (HOTP) of the second key, and the payment transaction status;
wherein the generation of the updated first dispute code being a hashing of a HOTP of the second key, and the updated payment transaction status;
wherein the generation of the first verifying dispute code being a hashing of a HOTP of the second key, and one of the one or more preset status codes.

**14.** The system of claim 12,
wherein the generation of the second dispute code being a hashing of a HOTP of the first key, and the payment transaction status;
wherein the generation of the updated second dispute code being a hashing of a HOTP of the first key, and the updated payment transaction status;
wherein the generation of the second verifying dispute code being a hashing of a HOTP of the first key, and one of the one or more preset status codes.

**15.** The system of claim 11, wherein the one or more preset status codes comprising codes representing a first payment transaction state of information acquired, a second payment transaction state of processing successful a third payment transaction state of processing failed, and a forth payment transaction state of error stopped.

EP 2 722 801 A1

| Payer Mobile Comm. Device | Central Process Server | Payee Device |

101 — QR code scanned & decoded

decoded QR code info 102

104 — Generate payee's key; payer's key; kcount

Payment info; DC2a=hash(HOTP(payee's key+kcount)+SC00); payer's key;kcount

105

DC1a=hash(HOTP(payer's key +kcount)+SC00); payee's key; kcount

107 — Payment confirmed & PIN entered

106

Payment confirmation; PIN

108

109 — Payment transaction executed

110 — DC2b=hash(HOTP(payee's key+kcount)+SC01)

DC1b=hash(HOTP(payer's key+kcount)+SC01) 110

111 — Execution result of the transaction     Execution result of the transaction 111

112 — DC2b=hash(HOTP(payee's key+kcount)+SC01)

114 — Compute hash(HOTP(payee's key+kcount)+SCxx) and compare to DC2b

**FIG. 1**

11

Europäisches
Patentamt

European
Patent Office

Office européen
des brevets

## EUROPEAN SEARCH REPORT

Application Number

EP 13 18 2284

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 018 196 A (TAKARAGI KAZUO [JP] ET AL) 21 May 1991 (1991-05-21) * column 4, line 14 - column 5, line 65 * * column 6, line 33 - column 11, line 16; figures 1-3 * | 1-15 | INV. G06Q20/02 G06Q20/32 G06Q20/38 |
| Y | US 2009/094452 A1 (SHAO JUN [CN] ET AL) 9 April 2009 (2009-04-09) * paragraph [0009]; figures 3-7 * * sentence 95, paragraph 24; claims 1-20 * | 1-15 | |
| X | US 2011/060913 A1 (HIRD GEOFFREY [US] ET AL HIRD GEOFFREY R [US] ET AL) 10 March 2011 (2011-03-10) * paragraph [0003] - paragraph [0059]; figures 4-7 * | 1,6,11 | |
| E | US 2013/262309 A1 (GADOTTI ALESSANDRO [HK]) 3 October 2013 (2013-10-03) * the whole document * | 1,6,11 | |
| A | M'RAIHI VERISIGN M BELLARE UCSD F HOORNAERT VASCO D NACCACHE GEMPLUS O RANEN ALADDIN D: "HOTP: An HMAC-Based One-Time Password Algorithm; rfc4226.txt", 20051201, 1 December 2005 (2005-12-01), XP015054903, ISSN: 0000-0003 * the whole document * | 1-15 | TECHNICAL FIELDS SEARCHED (IPC) G06Q H04L G06F |
| A | US 4 885 777 A (TAKARAGI KAZUO [JP] ET AL) 5 December 1989 (1989-12-05) * the whole document * | 1-15 | |

The present search report has been drawn up for all claims

| Place of search | Date of completion of the search | Examiner |
|---|---|---|
| The Hague | 29 January 2014 | Guivol, Ouri |

EPO FORM 1503 03.82 (P04C01)

**ANNEX TO THE EUROPEAN SEARCH REPORT
ON EUROPEAN PATENT APPLICATION NO.**

EP 13 18 2284

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2014

| Patent document cited in search report | | Publication date | Patent family member(s) | | Publication date |
|---|---|---|---|---|---|
| US 5018196 | A | 21-05-1991 | NONE | | |
| US 2009094452 | A1 | 09-04-2009 | CN | 101821987 A | 01-09-2010 |
| | | | EP | 2201718 A2 | 30-06-2010 |
| | | | US | 2009094452 A1 | 09-04-2009 |
| | | | WO | 2009048902 A2 | 16-04-2009 |
| US 2011060913 | A1 | 10-03-2011 | US | 2011060913 A1 | 10-03-2011 |
| | | | WO | 2012030341 A1 | 08-03-2012 |
| US 2013262309 | A1 | 03-10-2013 | US | 2013262309 A1 | 03-10-2013 |
| | | | WO | 2013149578 A1 | 10-10-2013 |
| US 4885777 | A | 05-12-1989 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61715841 A
- US 60219712 A

- US 602197 A

**Non-patent literature cited in the description**

- **M'RAIHI.** RFC 4226. IETF, December 2005